# EUROPÄISCHE PATENTSCHRIFT

(11) **EP 4 081 774 B1**
(45) Veröffentlichungstag und Bekanntmachung des Hinweises auf die Patenterteilung: **09.09.2026**
(21) Anmeldenummer: 21839327.0
(22) Anmeldetag: 13.12.2021
(51) Int. Cl.: G01N 1/02, G01N 1/22

(54) **VORRICHTUNG UND VERFAHREN ZUM UNTERSUCHEN VON BEHÄLTERN AUF FREMDSTOFFE**
DEVICE AND METHOD TO INVESTIGATE CONTAINERS FOR THE PRESENCE OF FOREIGN SUBSTANCES
APPAREIL ET MÉTHODE DE RECHERCHE DE RÉCIPIENTS POUR LA PRÉSENCE DE SUBSTANCES ÉTRANGÈRES

(30) Priorität: 14.12.2020 DE 102020215850
(43) Veröffentlichungstag der Anmeldung: 02.11.2022
(73) Patentinhaber: Unisensor Sensorsysteme GmbH, 76149 Karlsruhe (DE)
(72) Erfinder: BOHLEBER, Juergen, 77815 Bühl (DE); FEY, Dirk, 67630 Neewiller (FR); VOLLMER, Marc, 77704 Oberkirch (DE)
(74) Vertreter: Ullrich & Naumann PartG mbB
(86) Internationale Anmeldenummer: PCT/DE2021/200258
(87) Internationale Veröffentlichungsnummer: WO 2022/128024

(56) Entgegenhaltungen:
- WO-A1-2018/006910
- DE-A1- 19 505 474
- DE-A1- 4 427 314
- DE-T2- 69 314 185

## Beschreibung

Die vorliegende Erfindung betrifft eine Vorrichtung zum Untersuchen von Behältern auf Fremdstoffe, umfassend zumindest einen Probenahmekopf, wobei mittels des zumindest einen Probenahmekopfs eine Menge eines ersten Fluids in den zumindest einen Behälter berührungslos über eine Öffnung des Probenahmekopfs mittels einer Fluideinbringvorrichtung einbringbar ist und wobei mittels des Probenahmekopfs eine Menge eines zweiten Fluids zum Untersuchen auf Fremdstoffe aus dem zumindest einen Behälter berührungslos entnehmbar ist.

Die Erfindung betrifft ferner ein Verfahren zum Untersuchen von Behältern auf Fremdstoffe.

Obwohl auf beliebigen Gebieten anwendbar, wird die vorliegende Erfindung in Bezug auf die Mehrfach-Verwendung von Behältern erläutert.

Obwohl auf beliebige Behälter anwendbar, wird die vorliegende Erfindung in Bezug auf Flaschen, beispielsweise Mehrweg-Flaschen erläutert.

Obwohl auf beliebige Fremdstoffe anwendbar, wird die vorliegende Erfindung in Bezug auf Benzin erläutert.

Der Einsatz von Kunststoffen im Mehrweg-Bereich erfährt in letzter Zeit erneute Bedeutung. Kunststoffmüll hat bereits eine erhebliche Auswirkung auf die Umwelt, sei es durch die Verschmutzung von Gewässern oder die immer weiter ansteigende Menge an Kunststoffmüll. Trotzdem erfreuen sich im Bereich der Getränkeindustrie Kunststoffflaschen nach wie vor großer Beliebtheit, nicht nur wegen ihres in Bezug auf Glasflaschen deutlich geringeren Gewichts, sondern auch wegen ihrer Robustheit. Mehrwegflaschen, also Flaschen, die im Laufe Ihres Lebens mehrfach mit Getränken (wieder) befüllt und verkauft werden, werden dabei von einigen Endverbrauchern auch zweckentfremdet benutzt. So werden Mehrwegkunststoffflaschen auch benutzt, um darin Öl, Benzin, Farben oder Ähnliches zwischenzeitlich aufzubewahren. Durch Ihre bedingte Dehnungsfähigkeit bei überhöhtem Druck weisen diese im Vergleich zu Glasflaschen auch eine geringere Gefährlichkeit hinsichtlich Explosion, etc. auf. Nichtsdestotrotz finden sich derart benutzte Flaschen auch im Recyclingkreislauf wieder. Da diese Flaschen jedoch die früher enthaltenen Fremdstoffe selbst nach entsprechendem Reinigen der Flasche teilweise zurückbehalten können, beispielsweise da gewisse Stoffe lipophil sind und in den Kunststoff diffundieren, dürfen diese Flaschen nicht mehr für Getränke beziehungsweise Lebensmittel weiterverwendet werden - diese Stoffe können bei einem Wiederbefüllen beispielsweise einen Fehlgeschmack verursachen - und müssen zuverlässig aussortiert werden.

Aus der DE 10 2004 048 146 A1 ist eine Vorrichtung zum Untersuchen von Behältern auf Fremdstoffe bekannt geworden. Hierbei wird über einen Probenahmekopf und über eine Druckluftlanze nach Aufsetzen des Probenahmekopfs auf eine Flasche Luft eingeblasen. Über eine Entnahmeleitung kann dann Gas aus der Flasche entnommen und das entnommene Gas einem Analysesystem zur weiteren Untersuchung zugeführt werden.

Problematisch hierbei ist, dass Flaschen nicht nur mit Fremdstoffen verunreinigt sein können, sondern auch physische Beschädigungen in Form von Löchern, Abbruchkanten oder dergleichen aufweisen können, insbesondere im Bereich der Flaschenöffnung. Wird nun der Probenahmekopf aufgesetzt und Druckluft eingeblasen, kann über derartige Beschädigungen beispielsweise Fremdluft in die Flasche gelangen und so das Messergebnis an dem entnommenen Gas verfälschen. Darüber hinaus kann auch aus der Fehlstelle das entnommene Gas ganz oder zumindest teilweise entweichen, also dann nicht oder nicht vollständig zum Analysesystem gelangen, was das Messergebnis verfälschen kann. Kontaminierte Flaschen werden so nicht aussortiert und gelangen wieder in die Abfüllung zur erneuten Befüllung mit Getränken.

Aus der DE 693 14 185 T2, der WO 2018/006910 A1, der DE 44 27 314 A1 und der DE 195 05 474 A1 sind weitere Vorrichtungen zum Untersuchen von Behältern auf Fremdstoffe bekannt geworden.

Die US 5,567,623 A zeigt ein Verfahren und ein System zum Untersuchen von Substanzen in Behältern, wie beispielsweise Glas- oder Plastikflaschen. Hierzu wird ein Probenahmekopf verwendet, um einerseits einen Luftstoss in eine Flasche einzuleiten und andererseits eine Luftmenge im Bereich der Öffnung der Flasche außerhalb dieser zu detektieren. Die Luftmenge im Bereich außerhalb der Flasche wird über eine Entnahmeleitung einer Analyseeinheit zugeführt. Dort wird die zugeführte Luftmenge aufgeteilt und ein Teil bei Anwesenheit von Nickeloxid, ein anderer Teil bei Anwesenheit von keramischen Materialien, erhitzt. Die beiden Luftteilmengen werden dann unterschiedlichen Detektoren zugeführt, die wiederum entsprechende Detektionssignale bereitstellen. Anhand der Signaldifferenz der beiden bereitgestellten Signale wird dann entschieden, welche Materialgruppe in der entnommenen Luftmenge vorliegt und letztlich, ob die Flasche aussortiert werden soll.

Eine Aufgabe der vorliegenden Erfindung ist es daher, die Zuverlässigkeit bei der Erkennung von Fremdstoffen in Behältern zu erhöhen ohne den Herstellungsaufwand und die Kosten wesentlich zu vergrößern. Eine weitere Aufgabe der vorliegenden Erfindung ist es, eine alternative Vorrichtung zum Untersuchen von Behältern auf Fremdstoffe und ein alternatives Verfahren zum Untersuchen von Behältern auf Fremdstoffe anzugeben.

Die vorliegende Erfindung löst die vorstehend genannte Aufgabe mit einer Vorrichtung gemäß Anspruch 1.

Die vorliegende Erfindung löst die vorstehende Aufgabe ebenfalls mit einem Verfahren gemäß Anspruch 9.

Unter dem Begriff "Fremdstoff" ist jeglicher Stoff oder jegliches Stoffgemisch zu verstehen, der beziehungsweise das nicht zweckgemäß in Bezug auf den Behälter gebraucht oder eingesetzt wird. Beispielsweise ist bei einer Getränkekunststoffmehrwegflasche der bestimmungs- oder zweckgemäße Gebrauch der Flasche auf die Aufbewahrung von für Menschen ohne wesentliche Gesundheitsgefahren trinkbare Stoffe begrenzt. Fremdstoffe für Getränkekunststoffmehrwegflaschen sind beispielsweise Benzin, Öl, Urin, Lacke, Lösungsmittel, etc.

Unter dem Begriff "Fluid" ist jeglicher Stoff oder jegliches Stoffgemisch zu verstehen, welches sich in gasförmigem und/oder flüssigem Aggregatzustand befindet.

Unter dem Begriff "zumindest teilweise" in Bezug auf den Begriff "Messzelle" sind Bauteile, Komponenten, Teile einer Messzelle zur optischen Untersuchung von Fluiden zu verstehen, die mit Licht zumindest einer Wellenlänge beaufschlagt werden, also bspw. ein mit Licht zumindest einer Wellenlänge zu beaufschlagendes Rohr, eine optische Zuleitung zur Messzelle, oder dergleichen. Die Formulierung "Messzelle zumindest teilweise im Probenahmekopf angeordnet" bedeutet in diesem Zusammenhang, bspw., dass eine optische Zuleitung für die Messzelle in dem Probenahmekopf angeordnet ist, die eigentliche Messzelle kann, muss jedoch nicht im Probenahmekopf angeordnet sein. Unter dem Begriff "zumindest teilweise" in Bezug auf den Begriff "Messzelle" sind insbesondere keine Leitungen, Rohre oder dergleichen zum Zuleiten eines Fluids zur Messzelle zu verstehen.

Einer der mit der Erfindung erzielten Vorteile ist, dass durch die Anordnung der Messzelle im Probenahmekopf und die berührungslose Probenahme eine schnelle und zuverlässige Untersuchung auf Fremdstoffe in Behältern erfolgen kann. Löcher, abgebrochene Kanten des Behälters sind zudem bei der berührungslosen Probenahme weniger relevant als bei einem direkten Aufsetzen des Probenahmekopfs auf eine Öffnung des Behälters. Damit wird insgesamt die Zuverlässigkeit der Erkennung von Fremdstoffen in Behältern wesentlich erhöht. Darüber hinaus sind damit auch keine wesentlichen zusätzlichen Kosten verbunden, denn eine Implementierung ist auf einfache und kostengünstige Weise möglich.

Weitere Merkmale, Vorteile und bevorzugte Ausführungsformen der Erfindung sind in den folgenden Unteransprüchen beschrieben oder werden durch diese offenbar.

Gemäß einer Weiterbildung ist eine Analyseeinrichtung zur Analyse des zweiten Fluids auf Fremdstoffe angeordnet, die mit der Messzelle verbunden ist, insbesondere mittels einer optischen Verbindung. Damit kann eine einfache und zuverlässige Untersuchung von Behältern auf Fremdstoffe erfolgen. Darüber hinaus ermöglicht eine optische Verbindung zwischen Analyseeinrichtung und Messzelle eine schnelle Datenübertragung. Die Analyseeinrichtung und die Messzelle können dabei so ausgebildet sein, insbesondere regelmäßige Messungen an einem Referenzfluid, insbesondere in Form eines Gases, vorzugsweise Stickstoff, durchzuführen, eventuelle Abweichungen von einem vorgegebenen Referenzergebnis zu ermitteln und die Abweichungen bei weiteren Messungen an Fluidproben, insbesondere automatisch zu kompensieren. Damit können unvermeidliche Driften automatisch kompensiert werden, sodass eine hohe Langzeitstabilität, eine hohe Sensitivität und hohe Messgenauigkeit über die Zeit bereitgestellt werden können. Als Referenzfluid können beispielsweise die folgenden Gasgemische verwendet werden: a) Gemisch aus SO₂ N38 (10 Vol. ppm), Propan N25 (40 Vol. ppm), Stickstoff N50 (Rest) und/oder b) Gemisch aus NH₃ N38 (10 Mol-ppm) und N₂ (Rest).

Gemäß einer Weiterbildung ist der Probenahmekopf in einer Halteeinrichtung lösbar angeordnet. Dies ermöglicht eine schnelle Austauschbarkeit, beispielsweise zur Reinigung oder bei Beschädigung. Zudem wird eine einfache Zugänglichkeit zum Probenahmekopf und damit zur Messzelle bereitgestellt.

Gemäß einer Weiterbildung weist die Halteeinrichtung zumindest zwei optische Zugänge auf, die zum optischen Zugang zur Messzelle dienen. Einer der damit möglichen Vorteile ist, dass die Messzelle auf zuverlässige Weise mit Licht zumindest einer Wellenlänge beaufschlagt werden kann. Das die Messzelle passierende Licht kann zur Analyse von der Messzelle auf einen Detektor geleitet werden, der wiederum mit einer Analyseeinrichtung zur Ermittlung von Fremdstoffen verbunden ist.

Gemäß einer Weiterbildung ist die Öffnung des Probenahmekopfs in einem zur Öffnung des Behälters benachbarten Bereich als Trichter ausgebildet, der fluidisch mit der Messzelle verbunden ist. Damit kann auf besonders zuverlässige Weise eine berührungslose Probenahme mittels des Probenahmekopfs erfolgen, da durch den Trichter immer eine ausreichend große Menge einer Fluidprobe aus dem Inneren des Behälters anhand des Trichters "gesammelt" werden kann und einer Analyseeinrichtung zugeführt werden kann.

Gemäß einer Weiterbildung ist im Trichter eine Fluideinleitvorrichtung, insbesondere zumindest ein Einblasrohr, zum Einbringen des ersten Fluids, angeordnet, welche mit der Fluideinbringvorrichtung verbunden ist. Einer der damit möglichen Vorteile ist eine kompakte Anordnung von Einbringort des ersten Fluids und Entnahmeort des zweiten Fluids.

Gemäß einer Weiterbildung ist die Fluideinleitvorrichtung außermittig im Trichter angeordnet. Ist die Fluideinleitvorrichtung seitlich, also nicht zentral im Probenahmekopf angeordnet, wird damit ein ellipsenähnlicher Wirbel beispielsweise von Luft in einer Flasche erzeugt, sodass gegebenenfalls vorhandene Luftschichten vermischt werden. Fremdstoffe in der Luft aus unteren Schichten gelangen so in den Bereich der Öffnung der Flasche und können so mittels des Probenahmekopfs zur Analyseeinrichtung transportiert werden. Insgesamt wird damit die Genauigkeit der Analyse und Zuverlässigkeit der Entnahme der Fluidprobe verbessert.

Gemäß einer Weiterbildung weist die Fluideinbringvorrichtung eine Ventileinrichtung mit einer Mehrzahl von insbesondere gleichen Ventilen auf, zur Bereitstellung von Druckpulsen für das erste Fluid zum Einbringen in den zumindest einen Behälter. Ein möglicher Vorteil hiervon ist, dass besonders kurze Pulse des ersten Fluids bereitgestellt werden können, da mehrere kleinere Ventile anstelle eines größeren einzelnen Ventils schneller schalten, insgesamt sich jedoch die Menge von erstem Fluid im entsprechenden Puls nicht verändert.

Die Öffnung des Probenahmekopfs ist über zumindest zwei Leitungen fluidisch mit der Messzelle verbunden. Dies ermöglicht eine schnelle und gleichzeitig zuverlässige Befüllung der Messzelle mit zweitem Fluid. Ablagerungen oder Verschmutzungen auf Grund von Fluidwirbeln werden so reduziert.

Gemäß einer Weiterbildung sind die zumindest zwei Leitungen symmetrisch zueinander angeordnet. Dies ermöglicht die gleiche Länge von Strömungswegen für das zweite Fluid und eine möglichst gleichmäßige Befüllung der Messzelle.

Gemäß einer Weiterbildung sind die Messzelle und/oder die Halteeinrichtung und/oder die Leitungen aus Metall, insbesondere Edelstahl und/oder Aluminium, und/oder Kunststoff hergestellt. Ein damit möglicher Vorteil eines derartigen migrationsarmen Materials ist eine einfache Reinigbarkeit der Messzelle sowie eine hohe Lebensdauer.

Gemäß einer Weiterbildung weist die Messzelle einen Ausgang zum Abführen des zweiten Fluids auf, welcher mit einer Unterdruckeinrichtung verbunden sein kann, insbesondere wobei der Ausgang zentral an der Messzelle angeordnet ist. Ein damit möglicher Vorteil ist eine zuverlässige Abführung des zweiten Fluids aus der Messzelle, gleichzeitig sorgt ein zentraler Ausgang, also ein Ausgang in der Mitte einer länglichen Messzelle für weniger Druckschwankungen über die Länge der Messzelle, gleichzeitig wird die Möglichkeit einer Wirbelbildung reduziert.

Gemäß einer Weiterbildung ist im Bereich des Ausgangs, insbesondere gegenüber dem Ausgang, in der Messzelle, eine Schmutzsammeleinrichtung angeordnet, insbesondere in Form einer Ausbuchtung. Vorteil hiervon ist, dass sich Schmutz durch Ablagerung von Partikeln aus dem zweiten Fluid beispielsweise in einer dafür vorgesehenen Ausbuchtung sammelt, sodass weiterhin eine zuverlässige Messung des zweiten Fluids mittels der Messzelle ermöglicht wird.

Gemäß einer Weiterbildung ist eine Reinigungsvorrichtung für die Messzelle angeordnet. Damit kann beispielsweise die Messzelle automatisch gereinigt werden, was die Lebensdauer der Messzelle weiter erhöht.

Gemäß einer Weiterbildung weist die Reinigungsvorrichtung eine Einbringeinrichtung auf zum Einbringen eines Reinigungsfluids in die Messzelle, insbesondere wobei die Einbringeinrichtung ausgebildet ist, an zumindest zwei, vorzugsweise gegenüberliegenden axialen Enden der Messzelle das Reinigungsfluid in die Messzelle und/oder in eine zur Messzelle zuführende zumindest eine Leitung einzubringen. Ein möglicher Vorteil hiervon ist eine schnelle und einfache Reinigung der Messzelle.

Gemäß einer Weiterbildung weist der Probenahmekopf zumindest einen zweiteiligen Aufbau auf, insbesondere wobei die zumindest zwei Teile lösbar aneinander festlegbar sind, vorzugsweise mittels einer Schraubverbindung. Dies ermöglicht eine schnelle Montage des Probenahmekopfs und eine einfache und kostengünstige Herstellung desselben.

Gemäß einer Weiterbildung weisen die zumindest zwei Teile den gleichen Aufbau auf, insbesondere sind diese als Halbschalen ausgebildet. Vorteil hiervon ist eine besonders einfache und kostengünstige Herstellung.

Gemäß einer Weiterbildung sind die Analyseeinrichtung und die Messzelle ausgebildet, mittels UV-Spektroskopie des zweiten Fluids, Fremdstoffe zu ermitteln. Vorteil ist eine zuverlässige Ermittlung von Fremdstoffen.

Gemäß einer Weiterbildung ist eine Fördereinrichtung für die Behälter angeordnet, derart, dass die Behälter an dem Probenahmekopf vorbeigeführt werden. Dies ermöglicht eine schnelle und gleichzeitig einfache Probenahme.

Gemäß einer Weiterbildung ist eine Fluidbereitstellungseinrichtung angeordnet, welche ausgebildet ist, das erste Fluid in Form eines Gases oder Gasgemisches bereitzustellen. Dabei kann auf gleichzeitig einfache und zuverlässige Weise ein Fluid bereitgestellt werden.

Gemäß einer Weiterbildung ist mittels der Fluidbereitstellungseinrichtung das Gas in Form von ölfreier Luft bereitstellbar. Damit kann auf besonders günstige Weise, beispielsweise indem einfach gesäuberte Umgebungsluft unter Druck in den Behälter eingebracht wird, das Gas bereitgestellt werden.

Gemäß einer Weiterbildung ist eine Sortiereinrichtung angeordnet, die ausgebildet ist anhand eines Resultats der Analyseeinrichtung Behälter abweichend von einem vorab definierten Resultat auszusortieren. Damit können auf zuverlässige Weise Behälter, bei denen kein Resultat oder ein von einem vorab definierten Resultat abweichendes Resultat vorliegt, aussortiert werden. Das vorab definierte Resultat kann beispielsweise durch eine Vielzahl von Behältern in unterschiedlichen Restmengen und unterschiedlichen Fremdstoffen kalibriert werden, so dass durch Vergleich des hinterlegten Resultats mit dem gemessenen Resultat eine Aussortierung des entsprechenden Behälters möglich wird.

Gemäß einer Weiterbildung ist die Sortiereinrichtung ausgebildet, die Behälter zumindest einmal erneut der Untersuchung auf Fremdstoffe zuzuführen. Damit kann beispielsweise dem Umstand Rechnung getragen werden, dass ein von dem vorab definierten Resultat abweichendes Resultat nicht notwendigerweise eine Aussortierung rechtfertigt. In diesem Fall wird der Behälter temporär aussortiert und später erneut auf Fremdstoffe untersucht. In bevorzugter Weise kann die Anzahl der erneuten Untersuchungen vorab festgelegt werden. Weicht das Resultat bei jeder oder einer vorab definierten Anzahl, einem vorab definierten Prozentsatz oder dergleichen der erneuten Untersuchungen weiterhin von dem vorab definierten Resultat ab, kann der Behälter endgültig aussortiert werden und beispielsweise entweder direkt aus dem Recycling von dem bestimmungsgemäßen Gebrauch des Behälters entfernt werden oder aber gegebenenfalls einer manuellen Kontrolle, etc. zugeführt werden.

Gemäß einer Weiterbildung des Verfahrens wird vor oder nach Durchführung der Schritte a)-f) zumindest ein weiteres Verfahren zur Untersuchung von Fremdstoffen an dem Behälter durchgeführt. Vorteil hiervon ist eine erhöhte Zuverlässigkeit bei der Ermittlung von Fremdstoffen in Behältern.

Gemäß einer Weiterbildung des Verfahrens wird ein Behälter aussortiert, wenn zumindest eines der Ergebnisse der Durchführung der Schritte a)-f) als auch der Durchführung des weiteren Verfahrens Fremdstoffe im Behälter ergeben haben. Vorteil hiervon ist eine erhöhte Zuverlässigkeit bei der Sortierung der Behälter, also die Unterscheidung in für das Recycling vorgesehene Behälter und zur Vernichtung vorgesehene Behälter.

Gemäß einer Weiterbildung des Verfahrens wird der Behälter zumindest einmal erneut der Untersuchung auf Fremdstoffe zugeführt, wenn zumindest ein Ergebnis nicht eindeutig ist und/oder mehrere Ergebnisse widersprüchlich sind. Einer der damit möglichen Vorteile ist, eine hohe Wiederverwendung von Behältern bei gleichzeitig hoher Zuverlässigkeit bei der Aussortierung nicht für das Recycling vorgesehener Behälter.

Gemäß einer Weiterbildung des Verfahrens wird Schritt b) so durchgeführt, dass das Einbringen des ersten Fluids lediglich in eine Öffnung des Behälters durchgeführt wird. Ein möglicher Vorteil ist, dass damit ein Eintrag von Partikeln, beispielsweise von Partikeln im äußeren Randbereich der Öffnung des Behälters nicht aufgewirbelt werden und so die Messung beziehungsweise Analyse verfälschen. Insgesamt wird damit die Zuverlässigkeit bei der Ermittlung von Fremdstoffen in Behältern weiter verbessert.

Weitere wichtige Merkmale und Vorteile der Erfindung ergeben sich aus den Unteransprüchen, aus den Zeichnungen, und aus dazugehöriger Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungen und Ausführungsformen der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile oder Elemente beziehen.

In den Figuren zeigen
- Fig. 1: in schematischer Form eine perspektivische Darstellung einer Ausführungsform der vorliegenden Erfindung;
- Fig. 2: einen prinzipiellen inneren Aufbau einer Vorrichtung gemäß einer Ausführungsform der vorliegenden Erfindung;
- Fig. 3: Schritte eines Verfahrens gemäß einer Ausführungsform der vorliegenden Erfindung; und
- Fig. 4: eine Sortieranlage mit einer Vorrichtung gemäß einer Ausführungsform der vorliegenden Erfindung in schematischer Form.

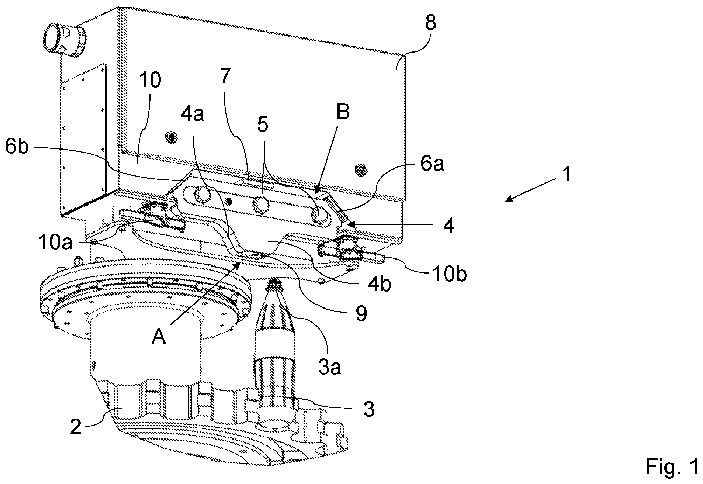

Figur 1 zeigt in schematischer Form eine perspektivische Darstellung einer Ausführungsform der vorliegenden Erfindung.

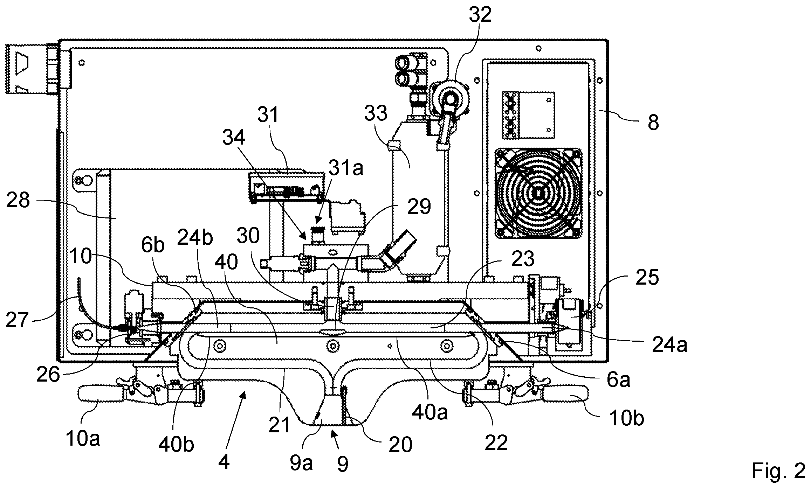

Im Detail ist in Figur 1 eine Vorrichtung 1 zum kontinuierlichen Untersuchen von Flaschen 3 auf Fremdstoffe gezeigt. Die Flaschen 3, hier wiederbefüllbare PET-Flaschen (REFPET-Flaschen - Refillable Polyethylenterephthalate-Flaschen), werden hierbei über einen Kreisförderer 2 zu der Vorrichtung 1, genauer in den Bereich eines Probenahmekopfs 4 der Vorrichtung 1 befördert. Der Kreisförderer 2 kann mit variablen einstellbaren Geschwindigkeiten bei Transportleistungen bis zu 60.000 Flaschen pro Stunde betrieben werden. Zur Erkennung der Position der Flaschen 3 können mehrere Lichtschranken (nicht gezeigt) angeordnet sein. Der Probenahmekopf 4 ist stationär angeordnet und arbeitet berührungslos. Über eine Öffnung 9 des Probenahmekopfs 4 wird im Wesentlichen kontinuierlich beziehungsweise getaktet ölfreie Luft unter Druck einer Analyse- und Lufteinheit 8 in eine Öffnung 3a des Behälters 3 eingeblasen und daraus entweichende Luft über die Öffnung 9 des Probenahmekopfs 4 einer Messzelle (siehe Figur 2) zur Analyse zugeführt. Hierbei sind das Einblasen von Druckluft mittels des Probenahmekopfs 4 in die Flaschen 3 mit dem Kreisförderer 2 entsprechend synchronisiert, insbesondere derart, dass ein Einblasen nicht auf oder neben dem Rand der Öffnung 3a der Flasche 3 erfolgt, sondern lediglich dann, wenn in die Öffnung 3a der Flasche 3 direkt eingeblasen wird. Dies vermeidet Schmutzaufwirbelungen vom Rand der Öffnung 3a der Flasche 3. Die Synchronisierung mit der Analyse- und Lufteinheit 8 kann dabei elektronisch oder auch mechanisch erfolgen, beispielsweise mittels eines Impuls- oder Taktgebers, sodass ein Druckluftimpuls über eine Düse einer Druckluftlanze in die Flasche 3 eingebracht wird und das in dieser befindliche Gas in den Probenahmekopf 4 strömen kann.

Der Probenahmekopf 4 umfasst zwei Halbschalen 4a, 4b, die im Wesentlichen den gleichen Aufbau aufweisen und - wie aus Figur 1 zu entnehmen ist - im Wesentlichen die Form eines "T" aufweisen mit kurzem senkrechtem Schenkel A und einem länglichen Schenkel B. Im Schenkel A ist an dessen Unterseite die Öffnung 9 angeordnet, im Schenkel B die Messzelle (siehe Figur 2). Die beiden Halbschalen 4a, 4b sind über ein oder mehrere Schraubverbindungen 5 aneinander lösbar festgelegt. Die in Figur 2 gezeigten Leitungen, Vertiefungen und Öffnungen können beispielsweise mittels Fräsen in die jeweiligen Halbschalen 4a, 4b eingebracht werden. Der Probenahmekopf 4 selbst ist mittels Schnellspanneinrichtungen 10a, 10b an einer Halteeinrichtung 10 lösbar festlegbar. Hierzu wird der Probenahmekopf 4 bei geöffneten Schnellspanneinrichtungen 10a, 10b von unten in die Halteeinrichtung 10 eingeführt und diese dann zur genauen Positionierung des Probenahmekopfs 4 in der Halteeinrichtung 10 geschlossen. Zum Beaufschlagen des Probenahmekopfs 4 mit Druckluft, Licht und dergleichen sind ein Positionier- und fluidisches Zugangselement 7 für die im Probenahmekopf 4 angeordnete Messzelle zentral beziehungsweise in der Mitte des Schenkels B angeordnet. In den beiden seitlichen Bereichen links und rechts am Schenkel B ist jeweils ein Positionier- und optisches Zugangselement 6a, 6b zum Beaufschlagen der Messzelle mit Licht zumindest einer Wellenlänge und zum Ausleiten des von der Messzelle kommenden Lichts angeordnet. In der Halteeinrichtung 10 selbst sind entsprechende Zugänge beziehungsweise Einrichtungen zur Nutzung der Zugangselemente 6a, 6b, 7 angeordnet (siehe Figur 2).

Fig. 2 zeigt einen prinzipiellen inneren Aufbau einer Vorrichtung gemäß einer Ausführungsform der vorliegenden Erfindung.

In Figur 2 ist nun im Wesentlichen der innere Aufbau der Analyse- und Lufteinheit 8 sowie der des Probenahmekopfs 4 gezeigt. Der Probenahmekopf 4 weist - wie bereits ausgeführt - an seinem unteren Ende eine Öffnung 9 auf. Diese ist kegelförmig als Trichter 9a ausgebildet. Außermittig in den Trichter mündet eine Druckluftlanze 20, die zum Einblasen von ölfreier Druckluft in einen Behälter 3 dient. Der Trichter 9a verzweigt sich stromaufwärts in zwei im Wesentlichen S-förmig ausgebildete Leitungen 21, 22, die an gegenüberliegenden Enden einer Messzelle 23 münden. Die Messzelle 23 ist im Wesentlichen als längliches Rohr oder Kanal parallel zur Förderrichtung der Behälter ausgebildet. In der Mitte der axialen Erstreckung der Messzelle 23 ist im oberen Bereich eine Öffnung 30 angeordnet, mit der Luft aus der Messzelle 23 abgesaugt werden kann. Darüber hinaus ist auch ein Druckluftanschluss (nicht gezeigt) angeordnet, der eine Ventil- und Luftsteuereinrichtung 34 mit einem Überdruck-Pufferspeicher 33 mit der Druckluftlanze 20 fluidisch verbindet. Gegenüber der Öffnung 30 ist im Rohr eine Vertiefung 29 angeordnet. Diese dient zum Sammeln von Schmutz im Bereich der Öffnung 30: Auf Grund der Absaugung über die Öffnung 30 bilden sich Luftwirbel, die zu einem Absetzen von gegebenenfalls vorhandenen Partikeln führen. Damit gelangen diese nicht in weitere Komponenten der Vorrichtung 1, was die Lebensdauer insgesamt beziehungsweise die Standzeit bis zur nächsten Reinigung verlängert. Es ist ebenso möglich, stromaufwärts der Öffnung 30 einen Filter zur Filterung der abgesaugten Luft anzuordnen. Damit wird vermieden, dass Grobschmutz aus der Umgebung, insbesondere aus dem Behälter, der durch das Einbringen des ersten Fluids durch das zweite Fluid mittransportiert wird, in das Absaugsystem gelangt und dieses verschmutzt. Damit lässt sich die Zuverlässigkeit der Vorrichtung weiter verbessern. Darüber hinaus kann ein weiterer Filter stromabwärts des soeben genannten Filters, beispielsweise in den Leitungen 21, 22 angeordnet sein, welcher eine weitere Filterung der entnommenen Luft bereitstellt. Dieser Filter kann insbesondere im Probenahmekopf 4 so angeordnet sein, dass eine besonders einfache Wartung durch einfache Zugänglichkeit desselben ermöglicht wird.

Zum optischen Zugang zur Messzelle 23 weist diese sowie der Probenahmekopf 4 optische Zugänge 24a, 24b an den axialen Enden der rohrförmigen Messzelle 23 auf. Mit dem einen optischen Zugang 24a ist eine Lichtquelle 25 verbunden zur Beaufschlagung der Messzelle 23 mit UV-Licht. Auf der anderen axialen Seite der Messzelle 23 ist der optische Zugang 24b mit einem hochauflösenden Detektor 26 verbunden. Das so gebildete Spektrometer - Lichtquelle 25, Messzelle 23 und Detektor 26 - kann als optisches UV-Spektrometer mit Gitter-Dispersion der optischen Strahlung, welches in einem Wellenlängenbereich zwischen 150 nm und 500 nm, vorzugsweise zwischen 190 nm und 400 nm betreibbar ist, und mit arrayförmig in einer Linie angeordneten Si-Sensoren der Anzahl wahlweise von 256, 512, 1024 Pixel-Elementen oder dergleichen ausgeführt sein. Als Lichtquelle 25 können Xenon- und/oder Deuterium-Strahler verwendet werden. Es ist damit möglich, eine hochauflösende Spektroskopie mit einer spektralen Differenzierung und einem spektralen Auflösungsvermögen von weniger als 3 nm, insbesondere weniger als 1 nm bereitzustellen.

Vorteil hiervon ist, dass damit eine hohe Genauigkeit bei der Detektion der Fremdstoffe erreicht wird. Mittels des Detektors 26 kann dann das von der Messzelle kommende Licht detektiert werden. Über eine optische Verbindung 27 ist der Detektor 26 dann mit der Analyseeinrichtung 28 verbunden. Die aus dem Behälter entnommene Luft wird somit in der Messzelle 23 spektroskopisch untersucht und anhand der erhaltenen Daten der spektroskopischen Untersuchung wird/werden mittels der Analyseeinrichtung 28 der/die Fremdstoff/e und insbesondere deren Konzentrationen ermittelt. Die Analyse kann hierbei unter Verwendung von multivariaten Kalibrationsmethoden, chemometrischen Methoden und/oder einen Vergleich der aufgenommenen Spektren mit Referenzspektren, sog. "Fingerprints" erfolgen. Unter multivariater Kalibration ist in der Beschreibung, insbesondere in den Ansprüchen beispielsweise die sogenannte "multiple linear regression" (MLR) oder die "principal component regression" (PCR) sowie die Teilweise-Kleinste-Quadrate-Regression oder "partial least squares" (PLS)-Regression zu verstehen. Alternativ oder zusätzlich können ebenfalls ein oder mehrere neuronale Netze zur Ermittlung von Fremdstoffen anhand der aufgenommenen Spektren herangezogen werden.

Weiterhin ist eine Reinigungseinrichtung 40 angeordnet, die hier im Wesentlichen zwei Leitungen 40a, 40b umfasst und die im Bereich der optischen Zugänge der Messzelle 23 in diese beziehungsweise die zuführenden Leitungen 21, 22 münden. Über die Leitungen 40a, 40b kann Druckluft oder allgemein ein Reinigungsfluid in die Messzelle 23 zu deren Reinigung eingebracht werden und dieses über die Öffnung 30 wieder abgeführt werden. Die Leitungen 40a, 40b sind hierzu mit einer entsprechenden Bereitstellungseinrichtung für Druckluft, für ein Reinigungsfluid oder dergleichen verbunden, beispielsweise mit der Ventil- und Luftsteuereinrichtung 34 und dem Überdruck-Pufferspeicher 33 (Verbindung hier nicht gezeigt). Die Zuführung des Reinigungsmediums, insbesondere der Druckluft kann hier zentral in die beiden gleich langen und symmetrisch aufgebauten Leitungen 40a, 40b erfolgen. Die Leitungen 40a, 40b können hierbei einen kleineren Durchmesser aufweisen als die Leitungen 21, 22.

Insgesamt ist der Trichter 9a stromabwärts über die Leitungen 21, 22, die Messzelle 23 und über die Öffnung 30 mit einer Unterdruckeinrichtung verbunden, hier mit einer Venturi-Düse 32, sodass kontinuierlich Luft vom Trichter 9a, in die Messzelle 23 und aus dieser über die Öffnung 30 wieder abgeführt werden kann. Zur Bereitstellung von Druckluft zum Einblasen in die Öffnung 3a eines Behälters 3 ist die Druckluftlanze 20 stromaufwärts mit einer Ventil- und Luftsteuereinrichtung 34 verbunden, die stationär angeordnet ist. Diese umfasst neben dem bereits genannten Überdruck-Pufferspeicher 33 ein Mehrfachventil 31a, welches über eine Ventilsteuerung 31 gesteuert wird. Das Mehrfachventil 31a weist mehrere kleinere und damit schneller schaltende Ventile auf, die eine schnelle Folge von Druckluftpulsen ermöglichen im Gegensatz zu einem größeren Ventil mit dem gleichen Druckluftmengendurchsatz. Darüber hinaus kann an geeigneter Position im Strömungsweg ein oder mehrere Drucksensoren angeordnet sein, um eine Kontrolle des Drucks sowohl beim Einblasen als auch beim Absaugen zu messen.

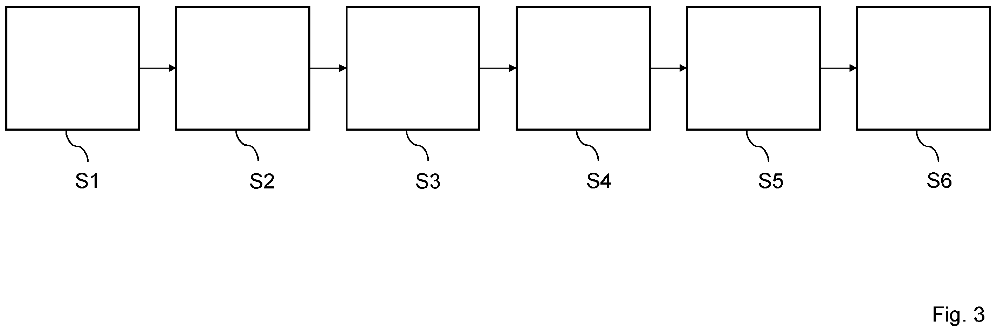

Fig. 3 zeigt Schritte eines Verfahrens gemäß einer Ausführungsform der vorliegenden Erfindung.

Im Detail zeigt Figur 3 in schematischer Form Schritte eines Verfahrens zum Untersuchen von Behältern auf Fremdstoffe mittels einer Vorrichtung gemäß einem der Ansprüche 1-8.

Das Verfahren umfasst dabei die Schritte:
a) Zuführen S1 eines Behälters zu dem Probenahmekopf der Vorrichtung in eine geeignete Position zur Probenahme,
b) Einbringen S2 einer Menge eines ersten Fluids in den Behälter mittels des Probenahmekopfs,
c) Entnehmen S3 einer Menge eines zweiten Fluids zur Untersuchung auf Fremdstoffe mittels des Probenahmekopfs aus dem zumindest einen Behälter,
d) Zuführen S4 der entnommenen Menge des zweiten Fluids in die Messzelle,
e) Durchführen S5 einer spektroskopischen Analyse des zweiten Fluids in der Messzelle, und
f) Ermitteln S6 von Fremdstoffen im Behälter basierend auf einem Ergebnis der spektroskopischen Analyse.

Anhand des Ergebnisses der Analyse kann anschließend entschieden werden, ob der untersuchte Behälter erneut untersucht wird, aussortiert wird oder dem Recyclingprozess zugeführt werden kann.

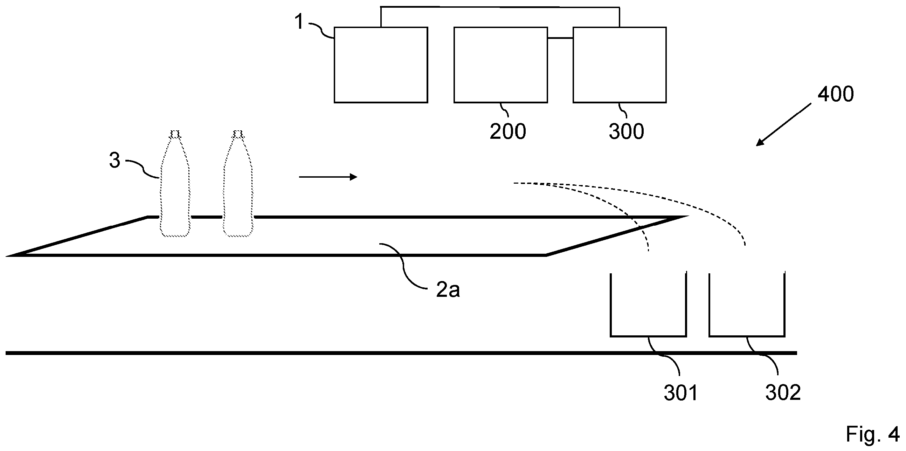

Fig. 4 zeigt eine Sortieranlage mit einer Vorrichtung gemäß einer Ausführungsform der vorliegenden Erfindung in schematischer Form.

In Figur 4 ist schematisch eine Sortieranlage 400 gezeigt. Die Sortieranlage 400, umfasst eine Behälterfördereinrichtung 2a, die Behälter 3 in eine Förderrichtung befördert. In Förderrichtung ist zunächst eine Vorrichtung 1 zum Untersuchen der Behälter 3 auf Fremdstoffe angeordnet. Weiter in Förderrichtung ist eine zweite Vorrichtung 200 zum Untersuchen von Behältern auf Fremdstoffe angeordnet. Diese kann beispielsweise nach dem Durchlichtprinzip arbeiten und am Boden des Behälters 3 gesammelte Flüssigkeit mit Licht beaufschlagen. Mittels des durch die Restflüssigkeit hindurchtretenden Lichts kann dann mittels eines Detektors und einer Analysevorrichtung ermittelt werden, ob und gegebenenfalls welche Fremdstoffe sich in dem Behälter 3 befinden.

Beide Vorrichtungen 1, 200 sind mit einer Sortiereinrichtung 300 verbunden, die in Abhängigkeit der Analyseergebnisse der Vorrichtungen 1, 200 entscheidet, wie die Behälter 3 sortiert werden sollen. Exemplarisch sind hier zwei Auffangbehälter 301, 302 angeordnet, in die die Sortiereinrichtung 300 die entsprechenden Behälter 3 sortieren kann, beispielsweise für den Recyclingkreislauf geeignete Behälter 3 in den Auffangbehälter 301 und dementsprechend nicht geeignete Behälter 3 in den Auffangbehälter 302. Es ist ebenfalls möglich, bei unklaren Ergebnissen der beiden Vorrichtungen eine Zuführeinrichtung vorzusehen, um Behälter erneut auf Fremdstoffe durch die Vorrichtung 1 und/oder Vorrichtung 200 untersuchen zu lassen.

Zusammenfassend ermöglicht die vorliegende Erfindung zumindest einen der folgenden Vorteile und/oder stellt zumindest eines der folgenden Merkmale bereit:
- Höhere Zuverlässigkeit und Genauigkeit der Detektion von Fremdstoffen.
- Kleinerer Bauraum.
- Einfache Implementierung, Wartung und Reinigung.
- Hoher Behälterdurchsatz möglich, insbesondere durch schnelles Befüllen der Messzelle.

Obwohl die vorliegende Erfindung anhand bevorzugter Ausführungsbeispiele beschrieben wurde, ist sie nicht darauf beschränkt, sondern auf vielfältige Weise modifizierbar.

### Bezugszeichenliste

- 1: Vorrichtung
- 2: Kreisförderer
- 2a: Linearförderer
- 3: Flasche
- 3a: Flaschenöffnung
- 4: Probenahmekopf
- 4a, 4b: Teil Probenahmekopf
- 5: Schraubverbindung
- 6a, 6b: Positionier- und optisches Zugangselement Messzelle
- 7: Positionier- und fluidisches Zugangselement Messzelle
- 8: Analyse- und Lufteinheit
- 9: Öffnung Probenahmekopf
- 9a: Trichter
- 10: Halter Probenahmekopf
- 10a, 10b: Schnellspanneinrichtung Probenahmekopf

- 20: Druckluftlanze
- 21, 22: Luftzuführleitung Messzelle
- 23: Messzelle
- 24a: Lichtleitung zur Messzelle
- 24b: Lichtleitung zum Detektor
- 25: UV-Lampe
- 26: Detektor
- 27: Lichtleiter
- 28: Analyseeinrichtung
- 29: Zentrale Ausbuchtung Messzelle
- 30: Luftabführung Messzelle
- 31: Ventilsteuerung
- 31a: Mehrfachventil
- 32: Venturi-Düse
- 33: Überdruck-Pufferspeicher
- 34: Ventil- und Luftsteuereinrichtung
- 40: Reinigungseinrichtung
- 40a, 40b: Luftkanal

- 200: Durchleuchteinrichtung
- 300: Sortiereinrichtung
- 301, 302: Behälter
- 400: Behältersortieranlage

- A, B: Schenkel

- S1-S6: Verfahrensschritte

## Patentansprüche

1. Vorrichtung (1) zum Untersuchen von Behältern (3) auf Fremdstoffe, umfassend zumindest einen Probenahmekopf (4), wobei mittels des zumindest einen Probenahmekopfs (4) eine Menge eines ersten Fluids in den zumindest einen Behälter (3) berührungslos über eine Öffnung (9) des Probenamekopfs (4) mittels einer Fluideinbringvorrichtung (20, 34) einbringbar ist und wobei mittels des Probenahmekopfs (4) eine Menge eines zweiten Fluids zum Untersuchen auf Fremdstoffe aus dem zumindest einen Behälter (3) berührungslos entnehmbar ist, wobei im Probenahmekopf (4) zumindest teilweise eine Messzelle (23) zur optischen Untersuchung des zweiten Fluids angeordnet ist,
**dadurch gekennzeichnet, dass**
die Öffnung (9) des Probenahmekopfs (4) über zumindest zwei Leitungen (21, 22) fluidisch mit der Messzelle (23) verbunden ist, vorzugsweise wobei die zumindest zwei Leitungen (21, 22) symmetrisch zueinander angeordnet sind, vorzugsweise wobei
eine Analyseeinrichtung (28) zur Analyse des zweiten Fluids auf Fremdstoffe angeordnet ist, die mit der Messzelle (23) verbunden ist, insbesondere mittels einer optischen Verbindung (27), insbesondere wobei
die Analyseeinrichtung (28) und die Messzelle (23) ausgebildet sind, mittels UV-Spektroskopie des zweiten Fluids Fremdstoffe zu ermitteln und/oder dass eine Sortiereinrichtung angeordnet ist, die ausgebildet ist, anhand eines Resultats der Analyseeinrichtung (28) Behälter (3) abweichend von einem vorab definierten Resultat auszusortieren, insbesondere wobei
die Sortiereinrichtung ausgebildet ist, die Behälter (3) zumindest einmal erneut der Untersuchung auf Fremdstoffe zuzuführen.

2. Vorrichtung gemäß Anspruch 1, **dadurch gekennzeichnet, dass** der Probenahmekopf (4) in einer Halteeinrichtung (10) lösbar angeordnet ist.

3. Vorrichtung gemäß einem der Ansprüche 1-2, **dadurch gekennzeichnet, dass** die Halteeinrichtung (10) zumindest zwei optische Zugänge (6a, 24a; 6b, 24b) aufweist, die zum optischen Zugang zur Messzelle (23) dienen und/oder dass die Öffnung (9) des Probenahmekopfs (4) in einem zur Öffnung (3a) des Behälters (3) benachbarten Bereich als Trichter (9a) ausgebildet ist, der fluidisch mit der Messzelle (23) verbunden ist, vorzugsweise wobei
im Trichter (9a) eine Fluideinleitvorrichtung (20), insbesondere zumindest ein Einblasrohr, zum Einbringen des ersten Fluids angeordnet ist, welche mit der Fluideinbringvorrichtung (20, 34) verbunden ist, insbesondere wobei
die Fluideinleitvorrichtung (20) außermittig im Trichter (9a) angeordnet ist.

4. Vorrichtung gemäß einem der Ansprüche 1-3, **dadurch gekennzeichnet, dass** die Fluideinbringvorrichtung (20, 34) eine Ventileinrichtung (31, 31a) mit einer Mehrzahl von insbesondere gleichen Ventilen (31a) aufweist zur Bereitstellung von Druckpulsen für das erste Fluid zum Einbringen in den zumindest einen Behälter (3).

5. Vorrichtung gemäß einem der Ansprüche 1-4, **dadurch gekennzeichnet, dass** die Messzelle (23) und/oder die Halteeinrichtung (10) und/oder die Leitungen (21, 22) aus Metall, insbesondere Edelstahl und/oder Aluminium, und/oder Kunststoff, hergestellt sind und/oder
dass die Messzelle (23) einen Ausgang (30) zum Abführen des zweiten Fluids aufweist, welcher mit einer Unterdruckeinrichtung (32) verbunden sein kann, insbesondere wobei der Ausgang (30) zentral an der Messzelle (23) angeordnet ist, vorzugsweise wobei
im Bereich des Ausgangs (30), insbesondere gegenüber dem Ausgang (30), in der Messzelle (23) eine Schmutzsammeleinrichtung (29) angeordnet ist, insbesondere in Form einer Ausbuchtung.

6. Vorrichtung gemäß einem der Ansprüche 1-5, **dadurch gekennzeichnet, dass** eine Reinigungsvorrichtung (40) für die Messzelle (23) angeordnet ist, insbesondere wobei
die Reinigungsvorrichtung (40) eine Einbringeinrichtung (40a, 40b) aufweist zum Einbringen eines Reinigungsfluids in die Messzelle (23), insbesondere wobei die Einbringeinrichtung (40a, 40b) ausgebildet ist, an zumindest zwei, vorzugsweise gegenüberliegenden axialen Enden der Messzelle (23) das Reinigungsfluid in die Messzelle (23) und/oder in eine zur Messzelle (23) zuführende zumindest eine Leitung (21, 22) einzubringen.

7. Vorrichtung gemäß einem der Ansprüche 1-6, **dadurch gekennzeichnet, dass** der Probenahmekopf (4) einen zumindest zweiteiligen Aufbau (4a, 4b) aufweist, insbesondere wobei die zumindest zwei Teile (4a, 4b) lösbar aneinander festlegbar sind, vorzugsweise mittels einer Schraubverbindung (5), vorzugsweise wobei die zumindest zwei Teile (4a, 4b) den gleichen Aufbau aufweisen, insbesondere als Halbschalen ausgebildet sind.

8. Vorrichtung gemäß einem der Ansprüche 1-7, **dadurch gekennzeichnet, dass** eine Fördereinrichtung (2) für die Behälter (3) angeordnet ist, derart, dass die Behälter (3) an dem Probenahmekopf (4) vorbeigeführt werden und/oder
dass eine Fluidbereitstellungseinrichtung (8, 33) angeordnet ist, welche ausgebildet ist, das erste Fluid in Form eines Gases oder Gasgemisches bereitzustellen, vorzugsweise wobei
mittels der Fluidbereitstellungseinrichtung (8, 33) das Gas in Form von ölfreier Luft bereitstellbar ist.

9. Verfahren zum Untersuchen von Behältern (3) auf Fremdstoffe mittels einer Vorrichtung gemäß einem der Ansprüche 1-8, umfassend die Schritte
a) Zuführen (S1) eines Behälters (3) zu dem Probenahmekopf (4) der Vorrichtung (1) in eine geeignete Position zur Probenahme,
b) Einbringen (S2) einer Menge eines ersten Fluids in den Behälter (3) mittels des Probenahmekopfs (4),
c) Entnehmen (S3) einer Menge eines zweiten Fluids zur Untersuchung auf Fremdstoffe mittels des Probenahmekopfs (4) aus dem zumindest einen Behälter (3),
d) Zuführen (S4) der entnommenen Menge des zweiten Fluids in die Messzelle (23),
e) Durchführen (S5) einer spektroskopischen Analyse des zweiten Fluids in der Messzelle (23), und
f) Ermitteln (S6) von Fremdstoffen im Behälter (3) basierend auf einem Ergebnis der spektroskopischen Analyse,
vorzugsweise wobei
vor oder nach Durchführung der Schritte a)-f) zumindest ein weiteres Verfahren zur Untersuchung von Fremdstoffen an dem Behälter (3) durchgeführt wird, insbesondere wobei
ein Behälter (3) aussortiert wird, wenn zumindest eines der Ergebnisse der Durchführung der Schritte a)-f) als auch der Durchführung des weiteren Verfahrens Fremdstoffe im Behälter (3) ergeben.

10. Verfahren gemäß Anspruch 9, **dadurch gekennzeichnet, dass** der Behälter (3) zumindest einmal erneut der Untersuchung auf Fremdstoffe zugeführt wird, wenn zumindest ein Ergebnis nicht eindeutig ist und/oder mehrere Ergebnisse widersprüchlich sind und/oder
dass Schritt b) so durchgeführt wird, dass das Einbringen des ersten Fluids lediglich in eine Öffnung (3a) des Behälters (3) erfolgt.

## Claims

1. Device (1) for examining containers (3) for foreign materials, comprising at least one sampling head (4), wherein by means of the at least one sampling head (4) a quantity of a first fluid can be introduced into the at least one container (3) in a contactless manner via an opening (9) of the sampling head (4) by means of a fluid introduction device (20, 34), and wherein by means of the sampling head (4) a quantity of a second fluid can be removed from the at least one container (3) in a contactless manner for examination for foreign materials, wherein
a measurement cell (23) for optical examination of the second fluid is at least partially arranged in the sampling head (4),
**characterised in that**
the opening (9) of the sampling head (4) is fluidically connected to the measurement cell (23) by means of at least two lines (21, 22), preferably wherein the at least two lines (21, 22) are arranged symmetrically relative to each other, preferably wherein
for analysis of the second fluid for foreign materials there is arranged an analysis device (28) which is connected to the measurement cell (23), in particular by means of an optical connection (27), in particular wherein
the analysis device (28) and the measurement cell (23) are constructed to establish foreign materials by means of UV spectroscopy of the second fluid, and/or
**in that** there is arranged a sorting device which is constructed, with reference to a result of the analysis device (28) to separate containers (3) deviating from a previously defined result, in particular wherein
the sorting device is constructed to supply the containers (3) at least once again for examination for foreign materials.

2. Device according to claim 1, **characterised in that** the sampling head (4) is releasably arranged in a retention device (10).

3. Device according to either claim 1 or claim 2, **characterised in that** the retention device (10) has at least two optical inlets (6a, 24a; 6b, 24b) which provide optical access to the measurement cell (23) and/or
**in that** the opening (9) of the sampling head (4) in a region adjacent to the opening (3a) of the container (3) is in the form of a funnel (9a) which is fluidically connected to the measurement cell (23), preferably wherein
there is arranged in the funnel (9a) for introducing the first fluid a fluid introduction device (20), in particular at least one injection pipe which is connected to the fluid introduction device (20, 34), in particular wherein
the fluid introduction device (20) is arranged eccentrically in the funnel (9a).

4. Device according to any one of claims 1 to 3, **characterised in that** the fluid introduction device (20, 34) has a valve device (31, 31a) having a plurality of in particular identical valves (31a) for providing pressure pulses for the first fluid for introduction into the at least one container (3).

5. Device according to any one of claims 1 to 4, **characterised in that** the measurement cell (23) and/or the retention device (10) and/or the lines (21, 22) are produced from metal, in particular stainless steel and/or aluminium, and/or plastics material and/or
**in that** the measurement cell (23) has an outlet (30) for discharging the second fluid which can be connected to a reduced pressure device (32), in particular wherein the outlet (30) is arranged centrally on the measurement cell (23), preferably wherein
in the region of the outlet (30), in particular opposite the outlet (30), a dirt collection device (29) is arranged in the measurement cell (23), in particular in the form of a protrusion.

6. Device according to any one of claims 1 to 5, **characterised in that** a cleaning device (40) for the measurement cell (23) is arranged, in particular wherein
the cleaning device (40) has an introduction device (40a, 40b) for introducing a cleaning fluid into the measurement cell (23), in particular wherein the introduction device (40a, 40b) is constructed at least at two preferably opposing axial ends of the measurement cell (23) to introduce the cleaning fluid into the measurement cell (23) and/or into at least one line (21, 22) which supplies to the measurement cell (23).

7. Device according to any one of claims 1 to 6, **characterised in that** the sampling head (4) has an at least two-part construction (4a, 4b), in particular wherein the at least two parts (4a, 4b) can be releasably secured to each other, preferably by means of a screw connection (5), preferably wherein the at least two parts (4a, 4b) have the same construction, in particular are in the form of half-shells.

8. Device according to any one of claims 1 to 7, **characterised in that** a conveying device (2) for the containers (3) is arranged in such a manner that the containers (3) are moved past the sampling head (4), and/or
**in that** there is arranged a fluid provision device (8, 33) which is constructed to provide the first fluid in the form of a gas or a gas mixture, preferably wherein
by means of the fluid provision device (8, 33) the gas can be provided in the form of oil-free air.

9. Method for examining containers (3) for foreign materials by means of a device according to any one of claims 1 to 8, comprising the steps of:
a) supplying (S1) a container (3) to the sampling head (4) of the device (1) in a suitable position for sampling,
b) introducing (S2) a quantity of a first fluid into the container (3) by means of the sampling head (4),
c) removing (S3) a quantity of a second fluid for examination for foreign materials by means of the sampling head (4) from the at least one container,
d) supplying (S4) the removed quantity of the second fluid to the measurement cell (23),
e) carrying out (S5) a spectroscopic analysis of the second fluid in the measurement cell (23), and
f) establishing (S6) foreign materials in the container (3) based on a result of the spectroscopic analysis,
preferably wherein
before or after carrying out the steps a) to f) at least one additional method for examination for foreign materials is carried out on the container, in particular wherein
a container (3) is separated when at least one of the results of carrying out the steps a) to f) and carrying out the additional method reveal foreign materials in the container (3).

10. Method according to claim 9, **characterised in that** the container (3) is supplied at least once again for examination for foreign materials if at least one result is not clear and/or a plurality of results are contradictory, and/or in that step b) is carried out in such a manner that the introduction of the first fluid is carried out only into one opening (3a) of the container (3).

## Revendications

1. Dispositif (1) pour examiner des récipients (3) sur des substances étrangères, comprenant au moins une tête de prélèvement d'échantillon (4), dans lequel, au moyen de la au moins une tête de prélèvement d'échantillon (4), une quantité d'un premier fluide peut être introduite sans contact dans le au moins un récipient (3) via une ouverture (9) de la tête de prélèvement d'échantillon (4) au moyen d'un dispositif d'introduction de fluide (20, 34), et dans lequel, au moyen de la tête de prélèvement d'échantillon (4), une quantité d'un second fluide pour examiner des substances étrangères peut être prélevée sans contact du au moins un récipient (3), dans lequel dans la tête de prélèvement d'échantillon (4), une cellule de mesure (23) pour l'examen optique du second fluide est disposée au moins partiellement, **caractérisé en ce que** l'ouverture (9) de la tête de prélèvement d'échantillon (4) est reliée fluidiquement à la cellule de mesure (23) via au moins deux conduites (21, 22), de préférence dans lequel les au moins deux conduites (21, 22) sont disposées symétriquement l'une par rapport à l'autre, de préférence dans lequel un dispositif d'analyse (28) pour l'analyse du second fluide sur des substances étrangères est disposé, qui est relié à la cellule de mesure (23), notamment au moyen d'une connexion optique (27), notamment dans lequel le dispositif d'analyse (28) et la cellule de mesure (23) sont conçus pour détecter des substances étrangères dans le second fluide au moyen de la spectroscopie UV et/ou qu'un dispositif de tri est disposé, qui est conçu pour écarter des récipients (3) sur la base d'un résultat du dispositif d'analyse (28) différent d'un résultat prédéfini, notamment dans lequel le dispositif de tri est conçu pour soumettre de nouveau les récipients (3) au moins une fois à l'examen sur des substances étrangères.

2. Dispositif selon la revendication 1, **caractérisé en ce que** la tête de prélèvement d'échantillon (4) est disposée de manière amovible dans un dispositif de maintien (10).

3. Dispositif selon l'une des revendications 1-2, **caractérisé en ce que** le dispositif de maintien (10) présente au moins deux accès optiques (6a, 24a ; 6b, 24b), qui servent d'accès optique à la cellule de mesure (23) et/ou **en ce que** l'ouverture (9) de la tête de prélèvement d'échantillon (4) est conçue, dans une zone adjacente à l'ouverture (3a) du récipient (3), comme un entonnoir (9a) relié fluidiquement à la cellule de mesure (23), de préférence dans lequel, dans l'entonnoir (9a), un dispositif d'introduction de fluide (20), notamment au moins un tube d'insufflation, pour introduire le premier fluide est disposé, lequel est relié au dispositif d'introduction de fluide (20, 34), notamment dans lequel le dispositif d'introduction de fluide (20) est disposé de manière excentrée dans l'entonnoir (9a).

4. Dispositif selon l'une des revendications 1-3, **caractérisé en ce que** le dispositif d'introduction de fluide (20, 34) présente un dispositif de soupape (31, 31a) avec une pluralité de soupapes (31a) notamment identiques pour fournir des impulsions de pression pour le premier fluide à introduire dans le au moins un récipient (3).

5. Dispositif selon l'une des revendications 1-4, **caractérisé en ce que** la cellule de mesure (23) et/ou le dispositif de maintien (10) et/ou les conduites (21, 22) sont fabriqués en métal, notamment en acier inoxydable et/ou aluminium, et/ou en matière plastique, et/ou **en ce que** la cellule de mesure (23) présente une sortie (30) pour évacuer le second fluide, laquelle peut être reliée à un dispositif de vide (32), notamment dans lequel la sortie (30) est disposée de manière centrale sur la cellule de mesure (23), de préférence dans lequel dans la zone de la sortie (30), notamment en face de la sortie (30), dans la cellule de mesure (23), un dispositif de collecte des impuretés (29) est disposé, notamment sous forme de renflement.

6. Dispositif selon l'une des revendications 1-5, **caractérisé en ce qu'**un dispositif de nettoyage (40) pour la cellule de mesure (23) est disposé, notamment dans lequel le dispositif de nettoyage (40) présente un dispositif d'introduction (40a, 40b) pour introduire un fluide de nettoyage dans la cellule de mesure (23), notamment dans lequel le dispositif d'introduction (40a, 40b) est conçu pour introduire le fluide de nettoyage dans la cellule de mesure (23) et/ou dans au moins une conduite (21, 22) d'alimentation à la cellule de mesure (23) à au moins deux extrémités axiales, de préférence opposées, de la cellule de mesure (23).

7. Dispositif selon l'une des revendications 1-6, **caractérisé en ce que** la tête de prélèvement d'échantillon (4) présente une structure au moins en deux parties (4a, 4b), notamment dans lequel les au moins deux parties (4a, 4b) peuvent être fixées l'une à l'autre de manière amovible, de préférence au moyen d'une connexion vissée (5), de préférence dans lequel les au moins deux parties (4a, 4b) présentent la même structure, notamment sont conçues comme des demi-coquilles.

8. Dispositif selon l'une des revendications 1-7, **caractérisé en ce qu'**un dispositif de transport (2) pour les récipients (3) est disposé, de sorte que les récipients (3) sont acheminés devant la tête de prélèvement d'échantillon (4) et/ou qu'un dispositif de fourniture de fluide (8, 33) est disposé, lequel est conçu pour fournir le premier fluide sous forme de gaz ou de mélange gazeux, de préférence dans lequel au moyen du dispositif de fourniture de fluide (8, 33), le gaz peut être fourni sous forme d'air sans huile.

9. Procédé pour examiner des récipients (3) sur des substances étrangères au moyen d'un dispositif selon l'une des revendications 1-8, comprenant les étapes
a) acheminer (S1) un récipient (3) vers la tête de prélèvement d'échantillon (4) du dispositif (1) dans une position appropriée pour le prélèvement d'échantillon,
b) introduire (S2) une quantité d'un premier fluide dans le récipient (3) au moyen de la tête de prélèvement d'échantillon (4),
c) prélever (S3) une quantité d'un second fluide pour l'examen sur des substances étrangères au moyen de la tête de prélèvement d'échantillon (4) du au moins un récipient (3),
d) acheminer (S4) la quantité prélevée du second fluide dans la cellule de mesure (23),
e) effectuer (S5) une analyse spectroscopique du second fluide dans la cellule de mesure (23), et
f) détecter (S6) des substances étrangères dans le récipient (3) sur la base d'un résultat de l'analyse spectroscopique,
de préférence dans lequel avant ou après l'exécution des étapes a)-f), au moins un autre procédé pour l'examen de substances étrangères sur le récipient (3) est effectué, notamment dans lequel
un récipient (3) est écarté si au moins l'un des résultats de l'exécution des étapes a)-f) ainsi que de l'exécution de l'autre procédé donne des substances étrangères dans le récipient (3).

10. Procédé selon la revendication 9, **caractérisé en ce que** le récipient (3) est soumis de nouveau au moins une fois à l'examen sur des substances étrangères si au moins un résultat n'est pas clair et/ou plusieurs résultats sont contradictoires et/ou **en ce que** l'étape b) est effectuée de sorte que l'introduction du premier fluide a lieu uniquement dans une ouverture (3a) du récipient (3).
